# EUROPÄISCHE PATENTSCHRIFT

(11) **EP 2 504 890 B1**
(45) Veröffentlichungstag und Bekanntmachung des Hinweises auf die Patenterteilung: **10.07.2013**
(21) Anmeldenummer: 10779241.8
(22) Anmeldetag: 04.11.2010
(51) Int. Cl.: H01R 13/629

(54) **LEICHT ZU REINIGENDER STECKVERBINDER**
EASY CLEAN CONNECTOR
CONNECTEUR FACILE À NETTOYER

(30) Priorität: 25.11.2009 DE 202009016090 U
(43) Veröffentlichungstag der Anmeldung: 03.10.2012
(73) Patentinhaber: Rosenberger Hochfrequenztechnik GmbH & Co. KG, 83413 Fridolfing (DE)
(72) Erfinder: ROSENBERGER, Bernd, 84529 Tittmoning (DE); STEER, Peter, 80686 München (DE); RABITSCH, Robert, 81477 München (DE)
(74) Vertreter: Zeitler - Volpert - Kandlbinder
(86) Internationale Anmeldenummer: PCT/EP2010/006735
(87) Internationale Veröffentlichungsnummer: WO 2011/063888

(56) Entgegenhaltungen:
- EP-A2- 1 626 463
- DE-A1- 4 439 852
- DE-U1- 29 918 358
- US-A1- 2007 105 417
- US-B1- 7 568 934

## Beschreibung

Die Erfindung betrifft einen Steckverbinder des sog. Push-Pull-Typs gemäß dem Oberbegriff des Anspruchs 1.

Bei bekannten Steckverbindern der gattungsgemäßen Art, beispielsweise DE 10 2005 057 444 B3 und US 2007/105417 A1, kommt ein sog. Push-Pull-Verschluss zur Anwendung. Dieser erfüllt üblicherweise seine Funktion zufriedenstellend, da der Steckverbinder durch einfaches Zusammenschieben des Steckerkörpers und des Buchsenkörpers gekuppelt werden kann. Hierbei kann im gesteckten Zustand das Ziehen am Kabel kein unbeabsichtigtes Lösen des Steckverbinders bewirken. Dieses Lösen des Steckverbinders erfolgt bewusst nur dann, wenn der Push-Pull-Verschluss gelöst wird.

Als nachteilig hat sich bei den bekannten Steckverbindern der gattungsgemäßen Art jedoch erwiesen, dass diese im nicht gesteckten Zustand verschmutzen können oder andere Fremdkörper in den offenen Steckverbinder eindringen, so dass ein Stecken bzw. Kuppeln nicht mehr möglich ist. Die üblichen Verschlusshülsen machen ein schnelles Reinigen ohne Hilfsmittel unmöglich, so dass dann derartige Steckverbinder für Anwendungen im Freien unbrauchbar sind. Es müssen daher bestehende Stecksysteme bei Verschmutzung entweder aufwendig mit Hilfsmitteln gereinigt werden, oder sie sind bei geringem Kontaktdurchmesser sogar unbrauchbar bzw. defekt.

Der Erfindung liegt daher die Aufgabe zugrunde, den Steckverbinder der gattungsgemäßen Art zur Beseitigung der geschilderten Nachteile derart auszugestalten, dass er bei einfacher Konstruktion gleichwohl ein leichtes Reinigen seiner Kontakte ermöglicht.

Diese Aufgabe wird erfindungsgemäß durch einen Steckverbinder mit den im Anspruch 1 angegebenen Merkmalen gelöst.

Vorteilhafte Ausgestaltungen hiervon sind in den weiteren Ansprüchen beschrieben.

Der Erfindung liegt der Gedanke zu Grunde, nicht nur die Arretierhülse verschiebbar auf dem Federkorb anzuordnen, sondern auch den Federkorb selbst verschiebbar auf dem Steckerkörper vorzusehen, und zwar derart, dass er in kabelseitiger Richtung soweit in eine Reinigungsposition zurückschiebbar ist, dass das steckerseitige Ende des Steckerkörpers frei zugänglich ist.

Hierdurch ist auf verblüffend einfache Weise erreicht, dass die steckerseitig am Steckerkörper vorgesehenen Kontakte, insbesondere POGO-Kontakte, für eine etwa erforderliche Reinigung leicht zugänglich sind, da zu diesem Zweck der Federkorb so weit in die gewünschte Reinigungsposition zurückschiebbar ist, dass das steckerseitige Ende des Steckerkörpers frei zugänglich ist.

Es ist von Vorteil, wenn der Federkörper gegen die Kraft einer Feder zurückschiebbar ist. Diese ist zweckmäßiger Weise auf dem Steckerkörper angeordnet und stützt sich vorzugsweise zwischen Federkorb und einer den Steckerkörper umgebenden Zugentlastungshülse ab.

Zum Betätigen des Federkorbes kann die Arretierhülse zur Anwendung gelangen, so dass der Federkorb mittels der Arretierhülse in die Reinigungsposition verschiebbar ist.

In spezieller Ausgestaltung kann die Arretierhülse zu diesem Zweck kabelseitig axial geschlitzte Federsegmente aufweisen, die beim Zurückschieben der Arretierhülse an einen Anschlag des Federkorbs, beispielsweise an einer auf den Federkorb geschraubten Mutter, anschlagen und den Federkorb verschieben.

Die Erfindung wird im Folgenden in Form eines Ausführungsbeispiels anhand der Zeichnung näher beschrieben. Diese zeigt in:
- Fig. 1: schematisch im Längsschnitt den Steckerkörper sowie den hiermit zu kuppelnden Buchsenkörper im nicht gesteckten Zustand,
- Fig. 2: im gesteckten Zustand und
- Fig. 3: den Steckerkörper in der Reinigungsposition, d. h. mit zurückgeschobenem Federkorb.

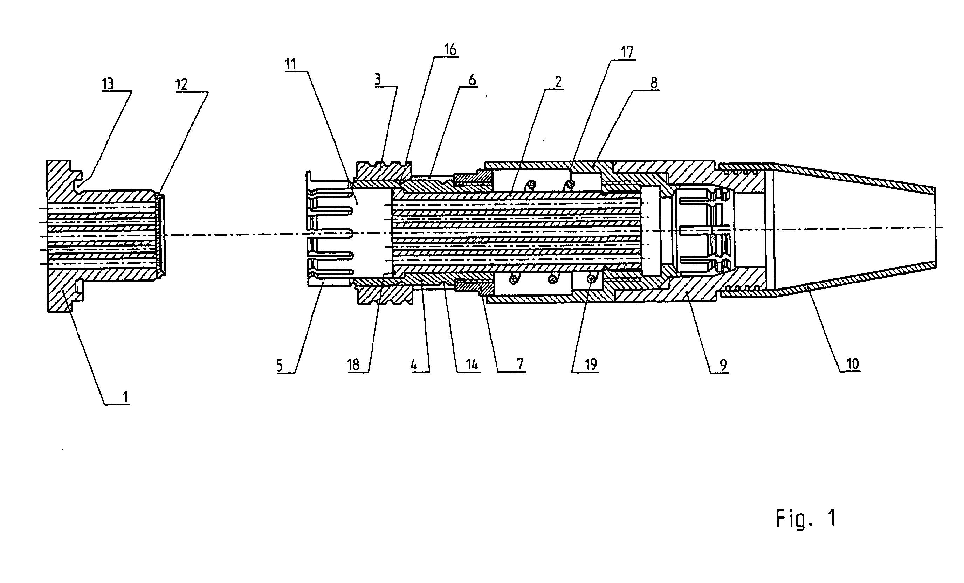

Wie aus der Zeichnung, insbesondere aus Fig. 1, ersichtlich, soll ein Buchsenkörper 1, der mit nicht näher dargestellten POGO-Kontaktbuchsen bestückt ist, mit einem Steckerkörper 2 gekuppelt werden, der seinerseits mit nicht näher dargestellten POGO-Kontakten bestückt.

Der Steckerkörper 2 weist eine Arretierhülse 3 auf, die auf einem Federkorb 4 axial verschiebbar ist. Der Federkorb 4 seinerseits ist auf dem Steckerkörper 2, diesen umgreifend, angeordnet.

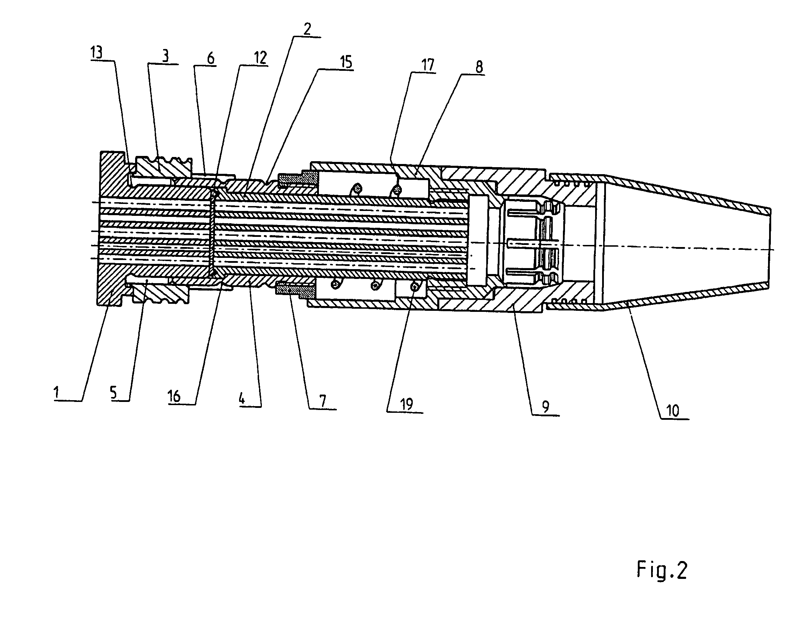

Der Federkorb 4 ist an seinem steckerseitigen Ende axial geschlitzt, so dass hierdurch Federzungen 5 gebildet sind, die im Kupplungszustand des Steckverbinders, d. h. bei an den Steckerkörper 2 angekuppeltem Buchsenkörper 1 (siehe Fig. 2), den Buchsenkörper 1 umfangsseitig federnd umgreifen.

Die Arretierhülse 3 weist, kabelseitig an ihr geriffeltes Griffteil anschließend, axial geschlitzte Federsegmente 6 auf, die in der nicht gekuppelten Stellung des Steckerkörpers 2, d. h. also bei nach rechts gemäß Fig. 1 verschobener Stellung der Arretierhülse 3, an eine Mutter 7 anschlagen, die kabelseitig auf den Federkorb 4 aufgeschraubt ist.

Wie aus Fig. 1 weiterhin ersichtlich, ist der Steckerkörper 2 kabelseitig in einer Zugentlastungshülse 8 befestigt, an die sich ihrerseits eine gleichfalls der Zugentlastung dienende Spannmutter 9 sowie eine hierauf aufgeschraubte Knickschutztülle 10 anschließen.

Um den Steckverbinder in den gekuppelten Zustand gemäß Fig. 2 zu verbringen, wird der Buchsenkörper 1 derart in den durch die Federzungen 5 des Federkorbs 4 gebildeten Aufnahmeraum 11 verbracht, dass dieser mit einer stirnseitig angebrachten Dichtungsmatte 12 an die steckerseitige Stirnseite des Steckerkörpers 2 anschlägt, wobei dann die POGO-Kontakte des Steckerkörpers 2 in die POGO-Kontaktbuchsen des Dichtungskörpers 1 eingreifen. Außerdem umgreifen die Federzungen 5 des Federkorbs 4 den Buchsenkörper 1 umfangsseitig, und zwar derart, dass sie mit ihrem vorderen gewölbt ausgebildeten Ende in eine Ringnut 13 des Buchsenkörpers 1 eingreifen.

Sodann wird die Arretierhülse 3 aus ihrer Ruheposition gemäß Fig. 1, in der sie nach rechts bis zum Anschlag an die Mutter 7 verschoben ist und mit einer an der Innenseite ihrer Federsegmente 6 vorgesehenen Innenschulter 14 in eine auf dem Federkorb 4 vorgesehene Ringnut 15 eingreift, nach vorn, d. h. nach links gemäß Fig. 2 verschoben, und zwar bis zum Anschlag an eine entsprechend ausgebildete Ringschulter des Buchsenkörpers 1.

In dieser Position greift die Arretierhülse 3, wie deutlich aus Fig. 2 ersichtlich, gleichfalls mit ihrer an der Innenseite der Federsegmente 6 vorgesehenen Innenschulter 14 in eine weitere Ringnut 16 des Federkorbs 4 ein, so dass hierdurch die Arretierhülse 3 in geeigneter Weise arretiert ist. In dieser Position drückt die Arretierhülse 3 die Federzungen 5 des Federkorbs 4 radial zusammen, so dass der Buchsenkörper 1 unverrückbar mit dem Steckerkörper 2 gekuppelt ist.

Zum Entkuppeln des Buchsenkörpers 1 vom Steckerkörper 2 wird demgemäß die Arretierhülse 3 nach rechts gemäß Fig. 2 geschoben, bis deren Federsegmente 6 zum Anschlag an die Mutter 7 des Federkorbs 4 kommen und mit der Innenschulter 14 in der hinteren Ringnut 15 einrasten. Dadurch werden die Federzungen 5 des Federkorbs 4 in radialer Richtung wieder freigegeben, so dass der Buchsenkörper 1 vom Steckerkörper 2 abgezogen werden kann.

Um die POGO-Kontakte des Steckerkörpers 2 für eine etwa erforderliche Reinigung besser als bisher zugänglich zu machen, sieht die Erfindung eine ganz besondere Anordnung vor, nämlich dahingehend, dass der Federkorb 4 verschiebbar auf dem Steckerkörper 2 angeordnet und in kabelseitige Richtung soweit in eine Reinigungsposition zurückschiebbar ist, dass das steckerseitige (linke) Ende des Steckerkörpers 2 frei zugänglich ist. Zu diesem Zweck ist die Mutter 7 des Federkorbs 4 umfangsseitig im Innenumfang der Zugentlastungshülse 8 geführt, und zwar bis zu einem als Ringschulter 17 ausgebildeten Anschlag am Innenumfang der Zugentlastungshülse 8. Demgegenüber ist das Ausmaß der Verschiebbarkeit des Federkorbs 4 in Richtung nach links gemäß Fig. 1 durch eine steckerseitige Ringschulter 18 des Steckerkörpers 2 begrenzt, an welche eine nicht näher bezeichnete Innenschulter des Federkorbs 4 anschlägt.

Der Federkorb 4 steht unter der Wirkung der Kraft einer Positionierfeder 19, die auf dem Steckerkörper 2 angeordnet ist und sich zwischen Federkorb 4 und einer Innenschulter der Zugentlastungshülse 8 abstützt.

Wenn dann die POGO-Kontakte des Steckerkörpers 2 zum Zweck der Reinigung leicht zugänglich gemacht werden sollen, wird die Arretierhülse 3 aus der Position gemäß Fig. 1, in der ihre Federsegmente 6 an die Mutter 7 des Federkorbs 4 anschlagen und im übrigen mit der Innenschulter 14 in die Ringnut 15 eingerastet sind, nach rechts gemäß Fig. 1 geschoben. Dadurch verschiebt sich auch der Federkorb 4 gegen die Kraft der Positionierfeder 19 auf dem Steckerkörper 2 nach rechts gemäß Fig. 1, und zwar maximal bis zu dem inneren Ringschulteranschlag 17 der Zugentlastungshülse 8 bzw. bis zum Anschlag des Griffteils der Arretierhülse 3 am stirnseitigen Ende der Zugentlastungshülse 8.

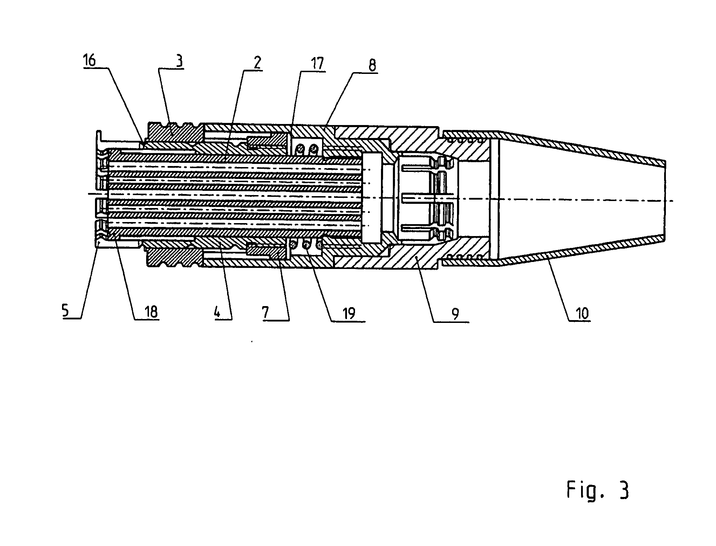

In dieser Stellung, die deutlich aus Fig. 3 ersichtlich ist, ist die steckerseitige Stirnseite des Steckerkörpers 2 völlig frei zugänglich, so dass die dort befindlichen POGO-Kontakte leicht gereinigt werden können.

Wenn dann die auf die Arretierhülse 3 ausgeübte Verschiebekraft entlastet wird, drückt die Positionierfeder 19 den Federkorb 4 wieder nach links gemäß Fig. 1, so dass dieser wieder seine durch die Ringschulter 18 des Steckerkörpers 2 begrenzte Stellung einnimmt (Fig. 1). In dieser Stellung kann der Buchsenkörper 1 wieder mit dem Steckerkörper 2 gekuppelt werden, wobei die Orientierung des Steckerkörpers 2 gegenüber dem Buchsenkörper 1 durch eine ungleich vorgesehene Teilung der Federzungen 5 des Federkorbs 4 sichergestellt ist.

Abschließend wird hinsichtlich nicht näher erläuterter Merkmale der Erfindung ausdrücklich auf die Zeichnung sowie die Ansprüche verwiesen.

## Patentansprüche

1. Steckverbinder mit einem Steckerkörper (2) zur steckerseitigen Aufnahme eines Buchsenkörpers (1) und mit einem auf dem Steckerkörper (2) angeordneten Federkorb (4) mit steckerseitig axial geschlitzten Federzungen (5), die den Buchsenkörper (1) in dessen mit dem Steckerkörper (2) gekuppeltem Zustand umfangsseitig umgreifen und durch eine auf dem Federkorb (4) verschiebbare Arretierhülse (3) radial zusammendrückbar sind,
**dadurch gekennzeichne**t**,**
dass der Federkorb (4) seinerseits verschiebbar auf dem Steckerkörper (2) angeordnet ist und ausgehend von einer Kupplungsstellung, in der das steckerseitige Ende des Steckerkörpers innerhalb eines von den Federzungen (5) des Federkorbs (4) gebildeten Aufnahmeraums (11) angeordnet ist, in kabelseitiger Richtung soweit in eine Reinigungsposition zurückschiebbar ist, dass das steckerseitige Ende des Steckerkörpers (2) frei zugänglich ist.

2. Steckverbinder nach Anspruch 1, **dadurch gekennzeichnet, dass** der Federkorb (4) gegen die Kraft einer Feder (19) zurückschiebbar ist.

3. Steckverbinder nach Anspruch 2, **dadurch gekennzeichnet, dass** die Feder (19) auf dem Steckerkörper (2) angeordnet ist und sich zwischen Federkorb (4) und einer den Steckerkörper (2) umgebenden Zugentlastungshülse (8) abstützt.

4. Steckverbinder nach einem der vorhergehenden Ansprüche, **dadurch gekennzeichnet, dass** der Federkorb (4) mittels der Arretierhülse (3) in die Reinigungsposition verschiebbar ist.

5. Steckverbinder nach Anspruch **4**, **dadurch gekennzeichnet, dass** die Arretierhülse (3) kabelseitig axial geschlitzte Federsegmente (6) aufweist, die beim Zurückschieben der Arretierhülse (3) an einen Anschlag des Federkorbs (4) anschlagen und den Federkorb (4) verschieben.

6. Steckverbinder nach Anspruch 5, **dadurch gekennzeichnet, dass** der Anschlag (7) des Federkorbes (4) eine auf diesen aufgeschraubte Mutter ist.

## Claims

1. Plug-in connector having a plug member (2) to receive a socket member (1) at its plug-in end, and having a resilient cage (4) which is arranged on the plug member (2) and which has resilient tongues (5) which are slotted axially at the plug-in end and which fit round the circumference of the socket member (1) in the state where the latter is coupled to the plug member (2) and can be compressed radially by a locking sleeve (3) which is displaceable on the resilient cage (4), **characterised in that** the resilient cage (4) is, in turn, arranged to be displaceable on the plug member (2) and, starting from a coupled position in which the plug-in end of the plug member is arranged inside a receiving space (11) which is formed by the resilient tongues (5) of the resilient cage (4), can be shifted back in the direction of the cable end, to a cleaning position, sufficiently far for the plug-in end of the plug member (2) to be freely accessible.

2. Plug-in connector according to claim 1, **characterised in that** the resilient cage (4) can be shifted back in opposition to the force exerted by a spring (19).

3. Plug-in connector according to claim 2, **characterised in that** the spring (19) is arranged on the plug member (2) and is supported between the resilient cage (4) and a strain relief sleeve (8) which surrounds the plug member (2).

4. Plug-in connector according to one of the preceding claims, **characterised in that** the resilient cage (4) is displaceable to the cleaning position by means of the locking sleeve (3).

5. Plug-in connector according to claim 4, **characterised in that** the locking sleeve (3) has resilient segments (6) which are slotted axially at the cable end and which, when the locking sleeve (3) is shifted back, butt against a stop on the resilient cage (4) and displace the resilient cage (4).

6. Plug-in connector according to claim 5, **characterised in that** the stop (7) on the resilient cage (4) is a nut which is screwed thereonto.

## Revendications

1. Connecteur enfichable comprenant un corps mâle (2) pour la réception, côté enfichage, d'un corps femelle (1), et comprenant une cage à ressort (4) agencée sur le corps mâle (2) avec des languettes de ressort (5) fendues axialement, côté enfichage, qui enserrent le corps femelle (1) sur sa périphérie dans sa situation accouplée avec le corps mâle (2) et qui peuvent être rassemblées à force radialement par une douille de blocage (3) en coulissement sur la cage à ressort (4), **caractérisé en ce que** la cage à ressort (4) est agencée de son côté en coulissement sur le corps mâle (2) et, partant d'une situation d'accouplement dans laquelle l'extrémité côté enfichage du corps mâle est agencée à l'intérieur d'une chambre de réception (11) formée par les languettes à ressort (5) de la cage à ressort (4), peut être reculée en direction du côté câble aussi loin jusque dans une position de nettoyage telle que l'extrémité du corps mâle (2) côté enfichage est librement accessible.

2. Connecteur enfichable selon la revendication 1, **caractérisé en ce que** la cage à ressort (4) peut être reculée à l'encontre de la force d'un ressort (10).

3. Connecteur enfichable selon la revendication 2, **caractérisé en ce que** le ressort (19) est agencé sur le corps mâle (2) et est soutenu entre la cage à ressort (4) et une douille de décharge de traction (8) qui entoure le corps mâle (2).

4. Connecteur enfichable selon l'une des revendications précédentes, **caractérisé en ce que** la cage à ressort (4) est déplaçable au moyen de la douille de blocage (3) jusque dans la position de nettoyage.

5. Connecteur enfichable selon la revendication 4, **caractérisé en ce que** la douille de blocage (3) comporte du côté câble des segments de ressort (6) fendus axialement qui, lors du recul de la douille de blocage (3), viennent buter contre une butée de la cage à ressort (4) et déplacent la cage à ressort (4).

6. Connecteur enfichable selon la revendication 5, **caractérisé en ce que** la butée (7) de la cage à ressort (4) est un écrou vissé sur celle-ci.
